(19) Europäisches Patentamt
European Patent Office
Office européen des brevets

(11) Veröffentlichungsnummer: **0 411 648 A1**

(12) # EUROPÄISCHE PATENTANMELDUNG

(21) Anmeldenummer: **90114900.5**

(22) Anmeldetag: **02.08.90**

(51) Int. Cl.5: **C09D 183/04**, B65D 23/02, B05D 5/00

(30) Priorität: **04.08.89 DE 3925901**

(43) Veröffentlichungstag der Anmeldung: **06.02.91 Patentblatt 91/06**

(84) Benannte Vertragsstaaten: **AT BE DE ES FR GB GR IT NL SE**

(71) Anmelder: **FhG FRAUNHOFER-GESELLSCHAFT ZUR FÖRDERUNG DER ANGEWANDTEN FORSCHUNG E.V.**
**Leonrodstrasse 54**
**D-8000 München 19(DE)**

(72) Erfinder: **Hörth, Franz-Josef**
**Rodachweg 7**
**D-8710 Schweinfurt(DE)**
Erfinder: **Greiwe, Klaus**
**Bronnbachergasse 19a**
**D-8700 Würzburg(DE)**
Erfinder: **Schmidt, Helmut**
**Am Schlosssand 9**
**D-8705 Zellingen(DE)**

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**D-8000 München 40(DE)**

(54) **Verfahren zur Herstellung von Diffusionssperrschichten mit geringer Kohlenwasserstoff-Durchlässigkeit und damit versehene Behälter.**

(57) Diffusionssperrschichten mit geringer Kohlenwasserstoff-Durchlässigkeit werden dadurch hergestellt, daß man hydrolysierbare Silane und gegebenenfalls andere Oxidkomponenten partiell hydrolytisch kondensiert und entweder als solches oder nach weiterer Kondensation auf ein Substrat aufbringt und härtet. Behälter für flüssige oder gasförmige Kohlenwasserstoffe weisen eine derart hergestellte Diffusionssperrschicht vorzugsweise auf der Innenseite auf.

EP 0 411 648 A1

# VERFAHREN ZUR HERSTELLUNG VON DIFFUSIONSSPERRSCHICHTEN MIT GERINGER KOHLENWASSERSTOFF-DURCHLÄSSIGKEIT UND DAMIT VERSEHENE BEHÄLTER

Die Erfindung betrifft ein Verfahren zur Herstellung von Diffusionssperrschichten mit geringer Durchlässigkeit für flüssige oder gasförmige Kohlenwasserstoffe sowie Behälter, die mit einer derartigen Diffusionssperrschicht versehen sind.

Kraftstoffbehälter aus Kunststoff, die als Lagertanks oder Kraftfahrzeugtanks zunehmend eingesetzt werden, dürfen nach den geltenden Normen gewisse Permeationswerte nicht überschreiten. So ist nach der neuen US-Norm eine Permeation für Benzin von maximal 5 $g/m^2.d$ zulässig. Die für derartige Kunststofftanks gewöhnlich angewandten Kunststoffe wie Polyethylen (HDPE) und Polypropylen (PP) haben jedoch Kohlenwasserstoff-Durchlässigkeiten von > 10 $g/m^2.d$. Um diese hohe Permeation auf den zulässigen Wert herabzusetzen, werden derzeit hauptsächlich zwei Verfahren angewandt: (1) die Sulfonierung und (2) die Fluorierung der Tankinnenseite. Beide Verfahren sind recht kostspielig. So wird z. B. bei der Fluorierung in den durch Blasformen hergestellten, noch heißen Tank vor dem Entformen elementares Fluor eingeleitet, das anschließend mit erheblichem Aufwand entsorgt werden muß.

Überraschenderweise wurde nun gefunden, daß durch hydrolytische Polykondensation von hydrolysierbaren Silanen und gegebenenfalls anderen Oxidkomponenten Diffusionssperrschichten mit sehr geringer Kohlenwasserstoff-Durchlässigkeit erhalten werden und zwar bereits bei äußerst dünnen Schichtdicken von z. B. 3 bis 10 µm. Dies ermöglicht einen erheblichen Kostenvorteil gegenüber bekannten Verfahren. Außerdem werden hervorragende Permeationswerte von < 1 $g/m^2.d$ erzielt; d. h. die Sperrwirkung liegt im Vergleich zu dem unbeschichteten Kunststoff bei 90 bis 95%.

Gegenstand der Erfindung ist daher ein Verfahren zur Herstellung von Diffusionssperrschichten mit geringer Kohlenwasserstoff-Durchlässigkeit, das dadurch gekennzeichnet ist, daß man eine Zusammensetzung, die erhältlich ist durch hydrolytische Polykondensation von

a) mindestens einem hydrolysierbaren Silan der Formel I

$R'_mSiX_{(4-m)}$

in der die Gruppen X, die gleich oder verschieden sein können, Wasserstoff, Halogen, Alkoxy, Acyloxy, Alkylcarbonyl, Alkoxycarbonyl oder $-NR''_2$ ($R''$ = H und/oder Alkyl) bedeuten, jedoch nicht alle Reste X gleichzeitig Wasserstoff sind, und die Reste $R'$, die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe $-NR''-$ unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure, Phosphorsäure-, Acryloxy-, Methacryloxy-, Epoxy- oder Vinylgruppen tragen können, und m den Wert 0, 1, 2 oder 3 hat,

und/oder einem davon abgeleiteten Oligomeren sowie gegebenenfalls

b) einem oder mehreren im Reaktionsmedium löslichen, schwerflüchtigen Oxiden eines Elements der Hauptgruppen Ia bis Va oder der Nebengruppen IIb bis VIIIb des Periodensystems oder der Lanthaniden und/oder einer oder mehreren im Reaktionsmedium löslichen, unter den Reaktionsbedingungen ein schwerflüchtiges Oxid bildenden Verbindungen eines dieser Elemente mit einer geringeren Wassermenge als der zur vollständigen Hydrolyse der hydrolysierbaren Gruppen stöchiometrisch erforderlichen Menge und gegebenenfalls in Anwesenheit eines Kondensationskatalysators, entweder

(i) auf ein Substrat aufbringt und härtet oder

(ii) durch Zugabe von weiterem Wasser, das die vollständige oder partielle Hydrolyse der verbliebenen hydrolysierbaren Gruppen bewirkt, sowie gegebenenfalls eines Kondensationskatalysators, weiterkondensiert und die Zusammensetzung auf ein Substrat aufbringt und härtet oder

(iii)auf ein Substrat aufbringt, in einer wasserdampfhaltigen Atmosphäre weiterkondensiert und anschließend härtet.

Der Anteil der Oxidkomponente b) beträgt, falls sie verwendet wird, gewöhnlich bis zu 75 Molprozent, vorzugsweise bis zu 50 Molprozent und insbesondere bis zu 30 Molprozent, bezogen auf die Gesamtmolzahl der (monomeren) Ausgangskomponenten.

Für die angegebenen allgemeinen Formeln gilt:

Alkylreste sind z.B. geradkettige, verzweigte oder cyclische Reste mit 1 bis 20, vorzugsweise 1 bis 10, Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl, Dodecyl, Octadecyl und Cyclohexyl.

Alkenylreste und Alkinylreste sind z.B. geradkettige, verzweigte oder cyclische Reste mit 2 bis 20,

vorzugsweise 2 bis 10 Kohlenstoffatomen und mindestens einer C-C-Doppel-bzw. Dreifachbindung und insbesondere niedere Alkenylreste und Alkinylreste wie Vinyl, Allyl, 2-Butenyl, Ethinyl und Propargyl.

Die Alkoxy-, Acyloxy-, Älkylamino-, Dialkylamino-, Alkylcarbonyl-, Alkoxycarbonyl-, Alkylaryl-, Arylalkyl-, Alkenylaryl-, Arylalkenyl-, Alkinylaryl-, Arylalkinyl- und die substituierten Aminoreste oder Amidreste leiten sich z.B. von den vorstehend genannten Alkyl-, Alkenyl- und Alkinylresten ab. Spezielle Beispiele sind Methoxy, Ethoxy, n- und i-Propoxy, n-, sek.- und tert.-Butoxy, Isobutoxy, $\beta$-Methoxyethoxy, Acetyloxy, Propionyloxy, Monomethylamino, Monoethylamino, Dimethylamino, Diethylamino, N-Ethylanilino, Methylcarbonyl, Ethylcarbonyl, Methoxycarbonyl, Ethoxycarbonyl, Benzyl, 2-Phenylethyl, Tolyl und Styryl. Bevorzugte Arylreste sind Phenyl, Hydroxyphenyl, Biphenyl und Naphthyl, wobei Phenyl besonders bevorzugt wird.

Die genannten Reste können gegebenenfalls einen oder mehrere Substituenten tragen, z.B. Halogenatome, niedere Alkyl- oder Alkoxyreste und Nitrogruppen.

Unter den Halogenen die direkt an das Zentralatom gebunden sind, sind Fluor, Chlor und Brom bevorzugt.

Beispiele für erfindungsgemäß verwendbare hydrolysierbare Silane sind:
$(CH_3O)_4Si$, $(C_2H_5O)_4Si$, $SiCl_4$, $HSiCl_3$, $(CH_3COO)_4Si$, $CH_3-Si-Cl_3$, $CH_2-Si-(OC_2H_5)_3$, $C_2H_5-Si-Cl_3$, $C_2H_5-Si-(OC_2H_5)_3$, $CH_2=CH-Si-(OC_2H_5)_3$, $CH_2=CH-Si-(OC_2H_4OCH_3)_3$, $CH_2=CH-Si-(OOCCH_3)_3$, $CH_2=CH-SiCl_3$, $CH_2=CH-CH_2-Si-(OCH_3)_3$, $CH_2=CH-CH_2-Si-(OC_2H_5)_3$, $C_3H_7-Si-(OCH_3)_3$, $C_6H_5-Si-(OCH_3)_3$, $C_6H_5-Si-(OC_2H_5)_3$,$(CH_3)_2-SiCl_2$, $(CH_3)_2-Si-(OC_2H_5)_2$, $(C_2H_5)_2-Si-(OC_2H_5)_2$, $(CH_3)(CH_2=CH)-Si-Cl_2$, $(CH_3)_3-Si-Cl$, $(C_2H_5)_3-Si-Cl$, $(CH_3)_2-Si-(OCH_3)_2$, $(CH_3)_2-Si-(OC_2H_5)_2$, $(C_6H_5)_2-Si-Cl_2$, $(C_6H_5)_2-Si-(OCH_3)_2$, $(C_6H_5)_2-Si-(OC_2H_5)_2$, $(t-C_4H_9)(CH_3)_2-Si-Cl$, $(CH_3)_2(CH_2=CH-CH_2)-Si-Cl$, $(CH_3O)_3-Si-C_3H_6-Cl$,

$(C_2H_5O)_3-Si-C_3H_6-CN$, $(CH_3O)_3-Si-C_3H_6-O-\overset{\overset{O}{\|}}{C}-\underset{\underset{CH_3}{|}}{C}=CH_2$

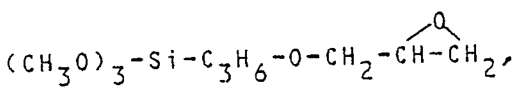, $(CH_3O)_3-Si-C_3H_6-NH_2$,
$(C_2H_5O)_3-Si-C_3H_6-NH_2$, $(C_2H_5O)_2(CH_3)Si-C_3H_6-NH_2$, $H_2N-CH_2-CH_2-NH-C_3H_6-Si-(OCH_3)_3$, $H_2N-CH_2-CH_2-NH-CH_2-CH_2-NH-C_3H_6-Si-(OCH_3)_3$,
$(CH_3O)_3-Si-(CH_2)_2-$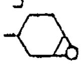

Diese Silane sind zum Teil Handelsprodukte oder sie lassen sich nach bekannten Methoden herstellen; vgl W. Noll, "Chemie und Technologie der Silicone", Verlag Chemie GmbH, Weinheim/Bergstraße (1968).

Anstelle der monomeren Ausgangssilane können gegebenenfalls auch vorkondensierte, im Reaktionsmedium lösliche Oligomere dieser Silane eingesetzt werden; d.h geradkettige oder cyclische, niedermolekulare Teilkondensate (Polyorganosiloxane) mit einem Kondensationsgrad von z.B. etwa 2 bis 100, insbesondere etwa 2 bis 6. Entsprechendes gilt für die Komponente (b).

Gegebenenfalls kann auch ein Oligomeres eingesetzt werden, das voneinander verschiedene Zentralatome aufweist.

Als Komponente (b) werden im Reaktionsmedium lösliche, schwerflüchtige Oxide oder derartige schwerflüchtige Oxide bildende Verbindungen von Elementen der Hauptgruppen Ia bis Va oder der Nebengruppen IIb bis VIII b des Periodensystems eingesetzt. Vorzugsweise leitet sich die Komponente (b) von folgenden Elementen ab: Alkalimetalle, wie Na und K, Erdalkalimetalle, wie Mg und Ca; B, Al, Sn, Pb, P, As, Sb, Bi, Ti, Zr, Cr, Mo, W, Mn, Fe, Co, Ni, Zn und/oder V, wobei B, Al, Ti, Zr, Sn, Zn und P besonders bevorzugt sind. Auch die Lanthaniden, wie Ce, La, Y oder Nd, können gegebenenfalls eingesetzt werden.

Unter den schwerflüchtigen Oxiden sind $B_2O_3$, $P_2O_5$ und $SnO_2$ besonders bevorzugt.

Im Reaktionsmedium lösliche, schwerflüchtige Oxide bildende Verbindungen sind z.B. anorganische Säuren, wie Phosphorsäure und Borsäure, sowie deren Ester. Ferner eignen sich z.B. Halogenide, wie $SnCl_4$ und $PCl_5$, und Alkoxide, wie NaOR, $Ca(OR)_2$, $Al(OR)_3$, $Ti(OR)_4$, $Zr(OR)_4$, $Sn(OR)_4$ und $VO(OR)_3$, wobei sich R von niederen Alkoholen, wie Methanol, Ethanol, Propanol oder Butanol, ableitet Weitere verwendbare Ausgangsverbindungen sind entsprechende Salze mit flüchtigen Säuren, z.B. Acetate, wie Siliciumtetraacetat, basische Acetate, wie basisches Bleiacetat, und Formiate.

Erfindungsgemäß verwendbare Aluminiumverbindungen sind insbesondere solche mit der Summenformel

$AlR_3$ (II)

in welcher die Reste R, die gleich oder verschieden sein können, Halogen, Alkyl, Alkoxy, Acyloxy oder

Hydroxy bedeuten, wobei die soeben genannten Gruppen ganz oder teilweise durch Chelatliganden ersetzt sein können. Die Anwesenheit eines Chelatliganden wird insbesondere dann bevorzugt, wenn zwei oder drei gleiche Reste R zu einer gegenüber $H_2O$ sehr reaktiven Verbindung $AlR_3$ führen und dadurch die Kontrolle der Hydrolysereaktion und die Vermeidung von Ausfällungen erschweren würden. Beispiele für solche Reste R sind Halogen und Alkyl. Auch für R = OH ist die Verwendung eines Chelatliganden vorteilhaft. Gängige Chelatliganden sind z.B. Acetylaceton und Acetessigsäureethylester.

Auch Al-Salze anorganischer und organischer Säuren, wie z.B. $HNO_3$, $H_2SO_4$, $H_3PO_4$ und Ameisensäure, Essigsäure, Propionsäure und Oxalsäure können erfindungsgemäß Verwendung finden. In diesem Fall empfiehlt sich ebenfalls die Komplexierung mit einem Chelatliganden.

Konkrete Beispiele für erfindungsgemäß verwendbare Aluminiumverbindungen sind $Al(OCH_3)_3$, $Al(OC_2H_5)_3$, $Al(O\text{-}n\text{-}C_3H_7)_3$, $Al(O\text{-}i\text{-}C_3H_7)_3$, $Al(OC_4H_9)_3$, $Al(O\text{-}i\text{-}C_4H_9)_3$, $Al(O\text{-sek.-}C_4H_9)_3$, $AlCl_3$, $AlCl(OH)_2$, Aluminiumformiat, Aluminiumacetat und Aluminiumoxalat sowie die entsprechenden (teilweise) chelatisierten Verbindungen, wie z.B. die Acetylacetonate. Bei Raumtemperatur flüssige Verbindungen, wie z. B. $Al(O\text{-sek.-}C_4H_9)_3$ und $Al(O\text{-}i\text{-}C_3H_7)_3$ werden besonders bevorzugt.

Eine weitere Gruppe von verwendbaren Verbindungen (b) sind solche der allgemeinen Formel (III)

$MR_4$ (III)

in welcher M für Titan oder Zirkonium steht und die Reste R, die gleich oder verschieden sein können, Halogen, Alkoxy oder Acyloxy bedeuten, wobei diese Gruppen ganz oder teilweise durch Chelatliganden ersetzt sein können, und/oder ein davon abgeleitetes Oligomeres. Hinsichtlich der Chelatliganden gilt das bereits für die Aluminiumverbindungen Gesagte.

Konkrete Beispiele für Titan- oder Zirkonverbindungen der Formel III sind $TiCl_4$, $ZrCl_4$, $Ti(OC_2H_5)_4$, $Ti(OC_3H_7)_4$, $Ti(O\text{-}i\text{-}C_3H_7)_4$, $Ti(OC_4H_9)_4$, $Ti(kresyl)_4$, $Zr(O\text{-}i\text{-}C_3H_7)_4$, $Zr(OC_4H_9)_4$, $Ti(acetylacetonato)_2(O\text{-}iC_3H_7)_2$, $Zr(acetylacetonato)_4$, $Ti(2\text{-}ethylhexoxy)_4$ und andere Titan- oder Zirkonkomplexe mit Chelatliganden, die vorzugsweise über Sauerstoff und/oder Stickstoff koordiniert sind.

Zur Herstellung des Lacks werden die Ausgangskomponenten im gewünschten Mischungsverhältnis mit einer geringeren Wassermenge als der zur vollständigen Hydrolyse aller eingesetzten hydrolysierbaren Gruppen stöchiometrisch erforderlichen Menge vorkondensiert. Diese unterstöchiometrische Wassermenge wird vorzugsweise so zudosiert, daß lokale Überkonzentrationen und dadurch verursachte Ausfällungen (von z.B. $Al_2O_3 \cdot xH_2O$) vermieden werden. Dies kann z.B. durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80-prozentigem Ethanol, oder Salzhydraten, z B. $CaCl_2$ $6H_2O$, geschehen. Ein anderer Weg ist die Wasserzuführung durch ein System, das Komponenten enthält, die miteinander reagieren und dabei langsam Wasser freisetzen, wie dies z.B. bei der Esterbildung aus Alkohol und Säure der Fall ist.

Vorzugsweise erfolgt die Vorkondensation in Gegenwart eines Kondensationskatalysators. Gegebenenfalls, insbesondere dann, wenn eine der Komponenten (a) bis (c) stark unpolar ist (z.B. ein Silan mit $R' =$ Aryl), kann ein mit Wasser zumindest teilweise mischbares organisches Lösungsmittel angewandt werden, z.B. ein aliphatischer Alkohol, wie Ethanol, Propanol, Isopropanol oder Butanol, ein Ether, wie Dimethoxyethan, ein Ester, wie Dimethylglykolacetat, oder ein Keton, wie Aceton oder Methylethylketon. n-Butanol wird als Lösungsmittel bevorzugt. Eventuell während der Vorkondensation zugesetztes oder gebildetes Lösungsmittel wird vorzugsweise nicht abgedampft, sondern das Reaktionsgemisch wird als solches zur Weiterkondensation eingesetzt.

Als Kondensationskatalysatoren eignen sich Protonen oder Hydroxylionen abspaltende Verbindungen und Amine. Spezielle Beispiele sind organische oder anorganische Säuren, wie Salzsäure, Schwefelsäure, Phosphorsäure, Ameisensäure oder Essigsäure, sowie organische oder anorganische Basen, wie Ammoniak, Alkali- oder Erdalkalimetallhydroxide, z.B. Natrium-, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 3 Mol/Liter betragen.

Besonders vorteilhaft ist es, wenn bereits eine der Reaktionskomponenten (a) oder (b) als Kondensationskatalysator wirkt. Hier sind insbesondere die Silane (a) zu nennen, die einen oder mehrere Reste $R'$ aufweisen, die mit basischen Gruppen, z B. $-NH_2$, substituiert sind. So haben sich z.B. Aminoalkylsilane für diese Zwecke sehr bewährt. Konkrete Beispiele für derartige Verbindungen sind $\gamma$-Aminopropylsilane, insbesondere $\gamma$-Aminopropyltri(m)ethoxysilan. Die Verwendung derartiger Verbindungen als Reaktionskomponenten hat den zusätzlichen Vorteil, daß dadurch eine entscheidende Verbesserung der Haftung der Zusammensetzung auf verschiedenen Substraten, z.B. Kunststoff, beobachtet werden kann. Derartige,als Kondensationskatalysator wirkende Reaktionskomponenten können entweder alleine oder in Kombination mit den üblichen, oben erwähnten Kondensationskatalysatoren verwendet werden.

Die Vorkondensation wird üblicherweise bei Temperaturen von -20 bis 100°C, vorzugsweise bei 0 bis 30°C durchgeführt. Bei Verwendung eines organischen Lösungsmittels kann die Vorkondensation auch bei Temperaturen bis zur Siedetemperatur des Lösungsmittels erfolgen, wird jedoch auch hier vorzugsweise bei 0 bis 30°C durchgeführt.

Gegebenenfalls kann man zunächst eine oder mehrere Ausgangskomponenten oder einen Teil einer, mehrerer oder aller Ausgangskomponenten vorkondensieren, dann die restlichen Ausgangskomponenten zumischen und anschließend dem Verfahren der Vorkondensation oder Weiterkondensation cokondensieren.

Die anschließende hydrolytische Weiterkondensation des Vorkondensats erfolgt in Gegenwart von weiterem Wasser, das ganz oder teilweise, z.B. zu mindestens 80 %, insbesondere mindestens 90 %, die Hydrolyse der noch verbliebenen hydrolysierbaren Gruppen bewirkt. Bevorzugt wird ein Wasserüberschuß, bezogen auf die noch vorhandenen hydrolysierbaren Gruppen, eingesetzt. In einer aus praktischen Gründen bevorzugten Ausführungsform wird zur Weiterkondensation die Wassermenge eingesetzt, die zur vollständigen Hydrolyse der ursprünglich eingesetzten Ausgangskomponenten stöchiometrisch erforderlich wäre (das bereits eingesetzte Wasser bleibt dabei also unberücksichtigt).

Um Ausfällungen so weit wie möglich zu vermeiden, wird es besonders bevorzugt, die Wasserzugabe in mehreren Stufen, z.B. in drei Stufen, durchzuführen. Dabei wird in der ersten Stufe z.B. 1/10 bis 1/20 der zur Hydrolyse stöchiometrisch benötigten Wassermenge zugegeben. Nach kurzem Rühren folgt die Zugabe von 1/5 bis 1/10 der stöchiometrischen Wassermenge und nach weiterem kurzen Rühren wird schließlich eine stöchiometrische Wassermenge zugegeben, so daß am Schluß ein leichter Wasserüberschuß vorliegt.

Die Weiterkondensation erfolgt vorzugsweise in Gegenwart eines der vorstehend genannten Kondensationskatalysatoren, wobei ebenfalls flüchtige Verbindungen und Reaktionskomponenten (a) bevorzugt sind. Die Gesamt-Katalysatorkonzentration kann z.B. bis zu 5 Mol/Liter betragen.

Bei der Weiterkondensation kann gegebenenfalls auch eines der vorstehend genannten organischen Lösungsmittel anwesend sein oder zugesetzt werden. Das während der Vor- und Weiterkondensation gebildete Lösungsmittel oder zur Vor- oder Weiterkondensation eventuell zugesetzte Lösungsmittel kann nach beendeter Weiterkondensation entweder nicht abgedampft werden oder es wird abgedampft und man nimmt den viskosen Rückstand in einem geeigneten Lösungsmittel, wie Ethylacetat oder Butanol, auf.

Das Vorkondensat reagiert aufgrund seiner Hydrolyseempfindlichkeit mit Wasserdampf und kann daher auch in einer wasserdampfhaltigen Atmosphäre weiterkondensiert werden. In diesem Fall kann ganz oder teilweise auf die Zugabe von weiterem Wasser zum Kondensat verzichtet werden.

Die Weiterkondensation erfolgt gewöhnlich bei Temperaturen von -20 bis 100°C, vorzugsweise 0 bis 30°C. Überraschenderweise hat sich gezeigt, daß beim Erhitzen der erhaltenen Zusammensetzung auf 40 bis 80°C ohne Abdampfen des Lösungsmittels eine Stabilisierung ihrer Viskosität erzielt wird; d.h. die Viskosität bleibt nach erfolger Polykondensation über längere Zeit im wesentlichen konstant.

Die Zusammensetzung ist nach dem Vorkondensieren bzw. nach dem Weiterkondensieren als solche verwendungsfähig. Gegebenenfalls können jedoch übliche Additive zugesetzt werden, z.B. organische Verdünnungsmittel, Verlaufmittel, Färbemittel (Farbstoffe oder Pigmente), UV-Stabilisatoren, Füllstoffe, Viskositätsregler, Gleitmittel, Netzmittel, Antiabsetzmittel oder Oxidationsinhibitoren.

Die Verarbeitung der Zusammensetzung muß innerhalb einer bestimmten Topfzeit erfolgen. Diese Topfzeit hängt stark von der Art und Menge der verwendeten Komponenten (a) bzw. (b) und kann z.B. 1 Tag, aber auch eine Woche oder sogar länger betragen.

Zur Beschichtung werden übliche Beschichtungsverfahren angewandt, z.B. das Tauchen, Fluten, Gießen, Schleudern, Spritzen oder Aufstreichen.

Als Substrate für die Beschichtungen eignen sich beliebige Werkstoffe, z.B. Kunststoffe, wie Polyethylen, Polypropylen, Polycarbonat, Polystyrol, Polyester, Polyether, Polyvinylchlorid, Polyepoxide und Polyurethane, sowie Papier oder Holz. Auch die Form des Substrats kann beliebig gewählt werden.

Die Beschichtung wird in Schichtdicken von z.B. 0,5 bis 100 µm, vorzugsweise 2 bis 50 µm und insbesondere 3 bis 15 µm aufgetragen. Gegebenenfalls kann das Substrat vor Aufbringen der erfindungsgemäßen Beschichtung mit einer Haftvermittler-oder Primerschicht grundiert oder durch Corona- oder Plasmabehandlung vorbehandelt werden. Bei geeigneter Wahl der Beschichtung kann jedoch auf eine derartige Vorbehandlung verzichtet werden.

Die aufgetragene Zusammensetzung wird anschließend ausgehärtet, indem man sie z.B. wärmebehandelt. Zur Aushärtung genügt im allgemeinen ein einige Minuten bis 1 Stunde dauerndes Erhitzen auf eine Temperatur von bis zu 200°C, vorzugsweise 60 bis 150°C und insbesondere 80 bis 130°C. Lediglich im Falle des Vorkondensats können etwas längere Härtungszeiten erforderlich sein, z.B. bis zu 2 Stunden. Über die Temperaturführung bei Weiterkondensation und Härtung können die Eigenschaften der Beschichtung noch in gewissem Rahmen variiert werden. So kann man z.B. zunächst eine relativ niedrige

Temperatur wählen und in einer zweiten Stufe die Temperatur erhöhen. Alternativ dazu kann man z.B. von Anfang an auf eine Temperatur am oberen Ende der angegebenen Bereiche erhitzen.

Gegebenenfalls kann auch eine Mehrfachbeschichtung erfolgen. Dazu sollte jedoch vor Auftragen der letzten Schicht nicht vollständig gehärtet werden, sondern nur teilweise (z.B Erhitzen für (jeweils) 5 bis 15 Minuten).

Zusätzlich zum oder statt des Erhitzens ist z.B. auch eine Härtung durch Bestrahlung (z.B. mit einem (IR-)Laser) möglich. Falls das Vorkondensat oder die weiterkondensierte Zusammensetzung aufgrund der Verwendung entsprechender Ausgangskomponenten polymerisierbare Gruppen enthält, kann die aufgetragene Lackschicht auch photochemisch gehärtet werden, z.B. mit UV-Strahlen. In diesem Fall werden der Lackformulierung vorzugsweise Photoinitiatoren zugesetzt. Für diesen Zweck bekannte Photoinitiatoren sind z.B. die unter den Warenzeichen Irgacure® und Dorocur® im Handel erhältlichen. Auch sonst kann sich eine chemische und/oder physikalische Nachbehandlung der Beschichtung als vorteilhaft erweisen. Hier ist insbesondere die Behandlung mit (energiereicher) Strahlung (UV, Laser, IR, Mikrowellen etc.) zu nennen.

Gegenstand der Erfindung sind ferner die auf die beschriebene Weise hergestellten, offenen oder geschlossenen Behälter, z. B. Lagertanks, Kraftfahrzeugtanks, Druckbehälter etc, für gasförmige oder flüssige Kohlenwasserstoffe.

Unter "Kohlenwasserstoffen" werden hierbei gesättigte und ungesättigte, aromatische, aliphatische und aliphatisch-aromatische, kurz- und langkettige, verzweigte und unverzweigte Kohlenwasserstoff-Verbindungen sowie deren halogenierte oder veretherte Derivate verstanden, z. B. Methan, Ethan, Propan, Butan, Ethen, Propen, Buten, Hexan, Benzol, Erdölfraktionen, wie Benzin, Kerosin, Dieselöl, Naphtha, Schmieröle und Schweröle, Kohlenstofftetrachlorid, Chloroform und Diethylether.

Aufgrund der erfindungsgemäßen Diffusionssperrschicht, die vorzugsweise auf der Innenseite des Behälters aufgebracht wird, werden Kohlenwasserstoff-Permeationswerte von < 1 g/m$^2$.d erzielt; d. h. gegenüber unbeschichteten Kunststoffen wird eine Verringerung der Durchlässigkeit um den Faktor 10 festgestellt.

Dies ist aus der beigefügten Zeichnung ersichtlich, in der zeigen:

Fig. 1 die Permeation von bleifreiem Normalbenzin bei 40°C in flüssiger Phase durch eine unbeschichtete bzw. zwei erfindungsgemäß beschichtete Polyethylen-Platten;

Fig. 2 die Permeation von bleifreiem Superbenzin bei 40°C in flüssiger Phase durch eine unbeschichtete bzw. zwei erfindungsgemäß beschichtete Polyethylen-Platten;

Fig. 3 die Permeation von bleifreiem Normalbenzin bei 40°C in der Gasphase durch eine unbeschichtete bzw. zwei erfindungsgemäß beschichtete Polyethylen-Platten; und

Fig. 4 die Permeation von bleifreiem Superbenzin bei 40°C in der Gasphase durch eine unbeschichtete bzw. zwei erfindungsgemäß beschichtete Polyethylen-Platten.

Die folgenden Synthesebeispiele erläutern die Herstellung der erfindungsgemäßen Diffusionssperrschichten.

**Allgemeine Synthesevorschrift**

Die Silane werden bei Raumtemperatur gemischt und bei Raumtemperatur mit 1/16 der zur vollständigen Hydrolyse notwendigen Wassermenge vorhydrolysiert. Hierauf rührt man 15 Minuten, kühlt die Mischung auf 15°C ab und tropft dann bei Verwendung von Oxidkomponenten b) diese derart zu, daß keine Gelierung erfolgt. Nach 15-minütigem Rühren werden weitere 2/16 Wasser zugetropft und weitere 15 Minuten gerührt. Eine eventuell entstehende Trübung verschwindet während dieser Nachrührzeit. Zum Schluß werden weitere 16/16 Wasser zugetropft. Das Gemisch wird nach Entfernen der Kühlung noch 2 Stunden gerührt. Bleiben Schwebstoffe zurück, können diese durch Druckfiltration mit einem Filter geeigneter Porengröße entfernt werden. Aus dem erhaltenen Lack können gegebenenfalls die bei der Hydrolyse entstandenen Alkohole und das überschüssige Wasser in einem Rotationsverdampfer entfernt werden. Der viskose Rückstand kann dann in einem geeigneten Lösungsmittel, wie Ethylacetat oder Butanol, aufgenommen werden.

**Synthesebeispiel 1**

0,30 Mol Propyltrimethoxysilan
0,45 Mol Glycidoxypropyltrimethoxysilan
0,05 Mol 3-Aminopropyltriethoxysilan
0,20 Mol Aluminiumtri-sek.-butylat

**Synthesebeispiel 2**

0,75 Mol Glycidoxypropyltrimethoxysilan

0,25 Mol Aluminiumtri-sek.-butylat

**Synthesebeispiel 3**

0,45 Mol Methacryloxypropyltrimethoxysilan
0,30 Mol Propyltrimethoxysilan
0,25 Mol Aluminiumtri-sek.-butylat

**Synthesebeispiel 4**

0,45 Mol Methacryloxypropyltrimethoxysilan
0,30 Mol Phenyltrimethoxysilan
0,25 Mol Aluminiumtri-sek.-butylat

**Synthesebeispiel 5**

0,50 Mol Methacryloxypropyltrimethoxysilan
0,50 Mol Methyltriethoxysilan

Die Zusammensetzung von Synthesebeispiel 5 kann nach einem vereinfachten Verfahren ohne Kühlung hergestellt werden.

## Anwendung und Testung

Die in den vorstehenden Synthesebeispielen erhaltenen Polykondensate werden auf corona-vorbehandelte Polyethylenplatten (HDPE mit 0,5% Rußfüllung) aufgetragen und gehärtet. Hierbei können die Zusammensetzungen aus den Synthesebeispielen 1 und 2 ohne Initiator bei 90°C innerhalb 15 bis 60 Minuten ausgehärtet werden. Die Zusammensetzungen aus den Synthesebeispielen 3, 4 und 5 können nach Zugabe eines Initiators, wie z.B. Benzoylperoxid, oder eines UV-Initiators wie z.B. Irgacure® 184 und 500 von Ciba-Geigy, auch durch Strahlung ausgehärtet werden. Sie können innerhalb weniger Minuten durch Bestrahlen mit UV-Licht oder IR-Strahlung, abhängig von Wellenlänge und Intensität der Strahlungsquelle, oder in 30 bis 120 Minuten thermisch ausgehärtet werden.

Die beschichteten Platten werden zur Bestimmung ihrer Kohlenwasserstoff-Durchlässigkeit einem 50 Tage-Dampftest (Prüfung in der Gasphase) und einem Test mit direkt benetzter Bschichtung unterzogen. Als Kohlenwasserstoffe werden in diesen Tests Normal-Vergaserkraftstoff und Superkraftstoff eingesetzt.

Die mit den Beschichtungen aus den Synthesebeispielen 1 (thermische Härtung) und 4 (UV-Härtung) erzielten Ergebnisse sind in den Fig. 1 bis 4 graphisch dargestellt.

## Ansprüche

1. Verfahren zur Herstellung von Diffusionssperrschichten mit geringer Kohlenwasserstoff-Durchlässigkeit, dadurch gekennzeichnet, daß man eine Zusammensetzung, die erhältlich ist durch hydrolytische Polykondensation von

a) mindestens einem hydrolysierbaren Silan der Formel I

$R'_mSiX_{(4-m)}$

in der die Gruppen X, die gleich oder verschieden sein können, Wasserstoff, Halogen, Alkoxy, Acyloxy, Alkylcarbonyl, Alkoxycarbonyl oder $-NR''_2$ ($R''$ = H und/oder Alkyl) bedeuten, jedoch nicht alle Reste X gleichzeitig Wasserstoff sind, und die Reste $R'$, die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe $-NR''-$ unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure, Phosphorsäure-, Acryloxy-, Methacryloxy-, Epoxy- oder Vinylgruppen tragen können, und m den Wert 0, 1, 2 oder 3 hat,

und/oder einem davon abgeleiteten Oligomeren sowie gegebenenfalls

b) einem oder mehreren im Reaktionsmedium löslichen, schwerflüchtigen Oxiden eines Elements der Hauptgruppen Ia bis Va oder der Nebengruppen IIb bis VIIIb des Periodensystems oder der Lanthaniden und/oder einer oder mehreren im Reaktionsmedium löslichen, unter den Reaktionsbedingungen ein schwerflüchtiges Oxid bildenden Verbindungen eines dieser Elemente

mit einer geringeren Wassermenge als der zur vollständigen Hydrolyse der hydrolysierbaren Gruppen stöchiometrisch erforderlichen Menge und gegebenenfalls in Anwesenheit eines Kondensationskatalysators, entweder

(i) auf ein Substrat aufbringt und härtet oder

(ii) durch Zugabe von weiterem Wasser das die vollständige oder partielle Hydrolyse der verbliebenen hydrolysierbaren Gruppen bewirkt, sowie gegebenenfalls eines Kondensationskatalysators, weiterkondensiert und die Zusammensetzung auf ein Substrat aufbringt und härtet oder

(iii)auf ein Substrat aufbringt, in einer wasserdampfhaltigen Atmosphäre weiterkondensiert und anschließend härtet.

2. Verfahren nach Anspruch 1, dadurch gekennzeichnet, daß die Komponente b) in einem Anteil von 0 bis 75 Molprozent, vorzugsweise 0 bis 50 Molprozent und insbesondere 0 bis 30 Molprozent, bezogen auf die Gesamtmolzahl der (monomeren) Ausgangskomponenten, verwendet wird.

3. Verfahren nach Anspruch 1 oder 2, dadurch gekennzeichnet, daß die Diffusionssperrschicht in einer Schichtdicke von 0,5 bis 100 $\mu$m, vorzugsweise 2 bis 50 $\mu$m und insbesondere 3 bis 15 $\mu$m aufgebracht wird.

4. Verfahren nach einem der Ansprüche 1 bis 3, dadurch gekennzeichnet, daß man ein Kunststoffsubstrat beschichtet.

5. Verfahren nach einem der Ansprüche 1 bis 4, dadurch gekennzeichnet, daß man das Substrat mit einem Primer vorbeschichtet oder durch Corona- oder Plasmabehandlung vorbehandelt.

6. Verfahren nach einem der Ansprüche 1 bis 5, dadurch gekennzeichnet, daß man die auf das Substrat aufgetragene Zusammensetzung durch Wärmebehandlung bei Temperaturen bis 200°C, vorzugsweise 60 bis 150°C, und/oder durch Bestrahlung mit IR-, Mikrowellen-, UV- oder Laserstrahlen härtet.

7. Verfahren nach einem der Ansprüche 1 bis 6, dadurch gekennzeichnet, daß man der Zusammensetzung übliche Lackadditive, wie organische Verdünnungsmittel, Verlaufmittel, Färbemittel, UV-Stabilisatoren, Füllstoffe, Viskositätsregler, Gleitmittel, Netzmittel, Antiabsetzmittel, Photoinitiatoren oder Oxidationsinhibitoren, zusetzt.

8. Behälter für flüssige oder gasförmige Kohlenwasserstoffe, dadurch gekennzeichnet, daß er eine gemäß einem der Ansprüche 1 bis 7 hergestellte Diffusionssperrschicht aufweist.

9. Behälter nach Anspruch 8, dadurch gekennzeichnet, daß sich die Diffusionssperrschicht auf der Innenseite des Behälters befindet.

10. Behälter nach Anspruch 8 oder 9, dadurch gekennzeichnet, daß die Diffusionssperrschicht eine Schichtdicke von 0,5 bis 100 $\mu$m, vorzugsweise 2 bis 50 $\mu$m und insbesondere 3 bis 15 $\mu$m hat.

11. Behälter nach einem der Ansprüche 8 bis 10, dadurch gekennzeichnet, daß er aus einem Kunststoff wie Polyethylen oder Polypropylen gefertigt ist.

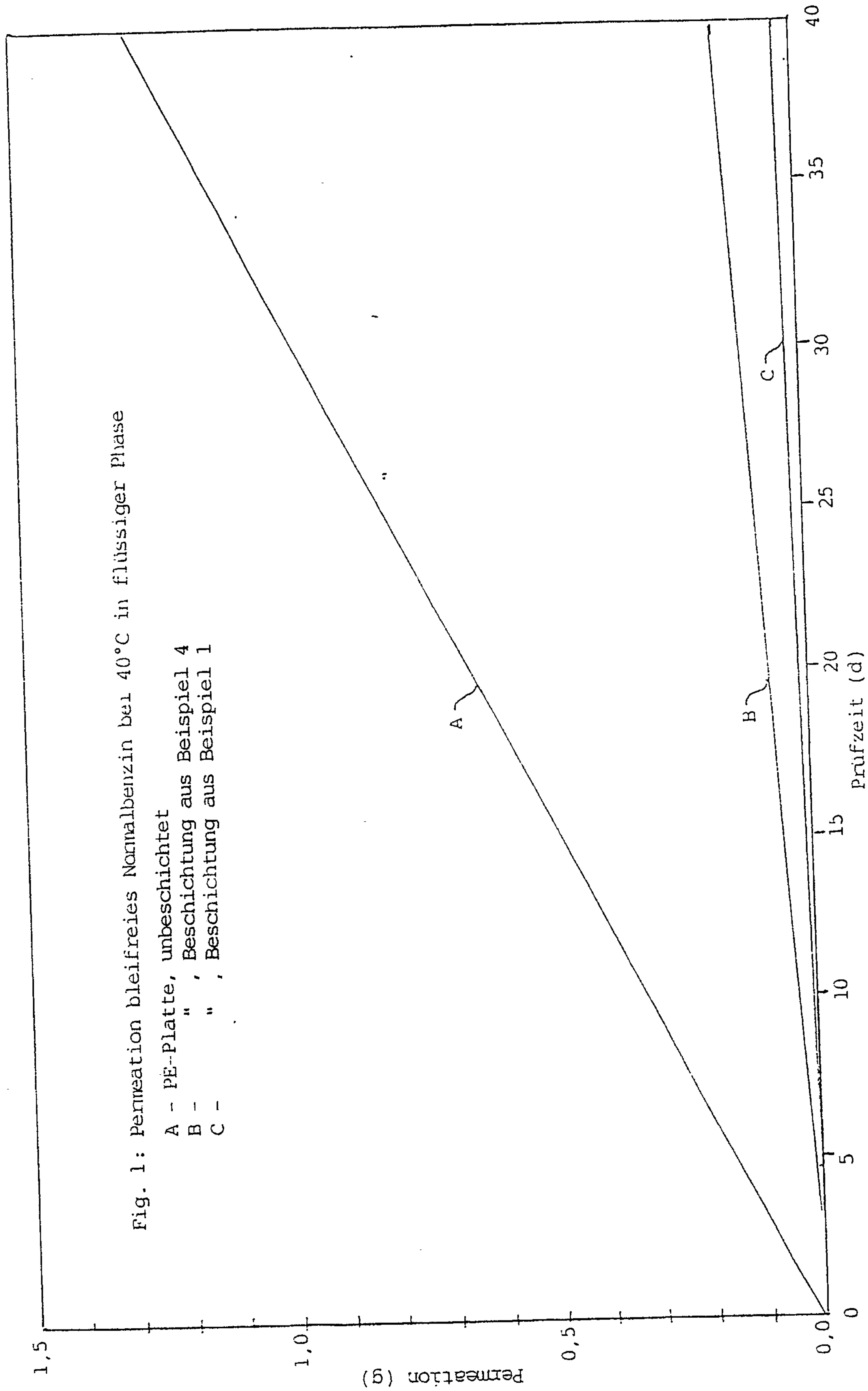


Fig. 1: Permeation bleifreies Normalbenzin bei 40°C in flüssiger Phase

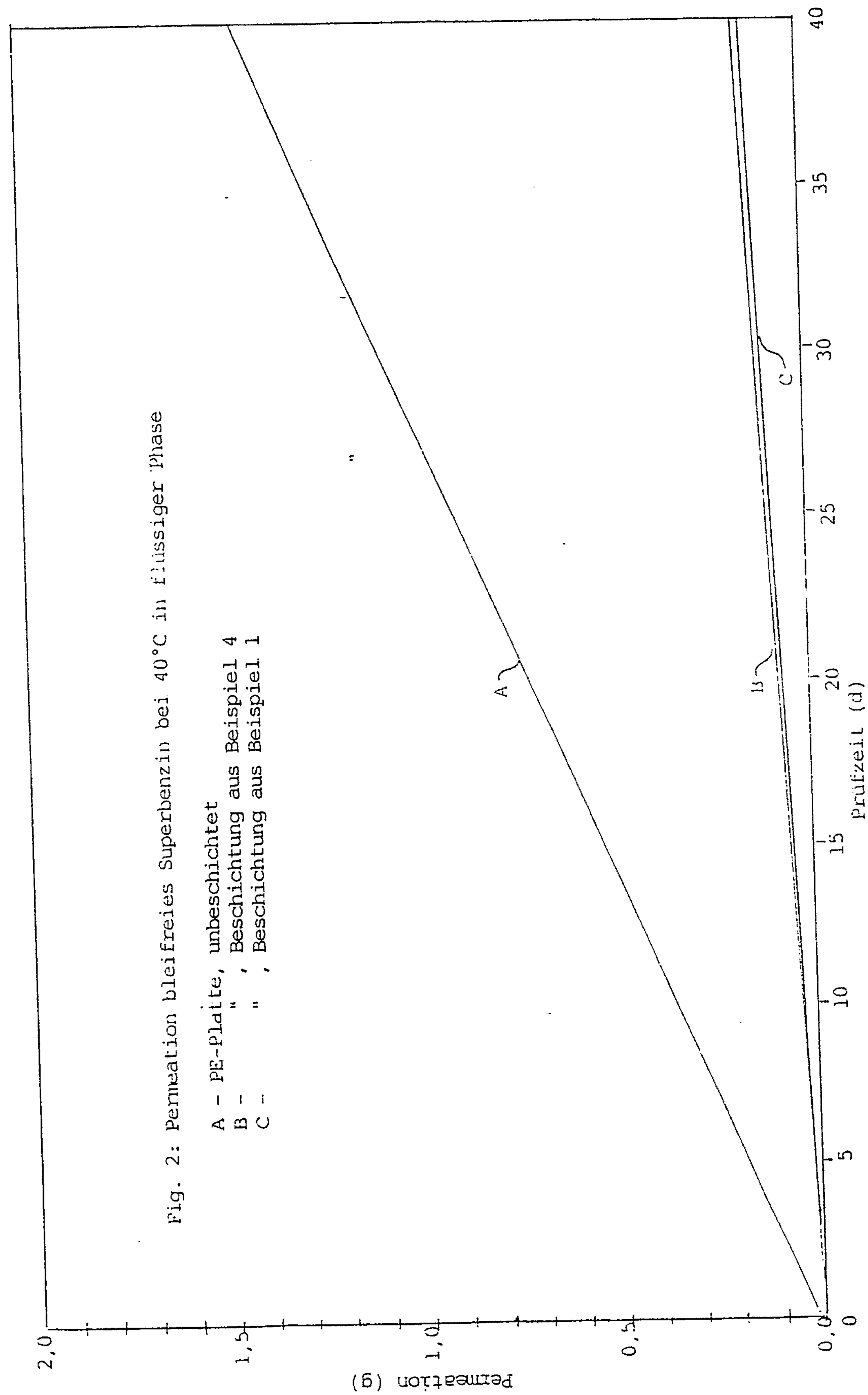


Fig. 2: Permeation bleifreies Superbenzin bei 40°C in flüssiger Phase

Fig 3: Permeation bleifreies Normalbenzin bei 40°C in der Gasphase
A - PE-Platte, coronabehandelt, unbeschichtet
B - " , " , Beschichtung aus Beispiel 4
C - " , " , Beschichtung aus Beispiel 1

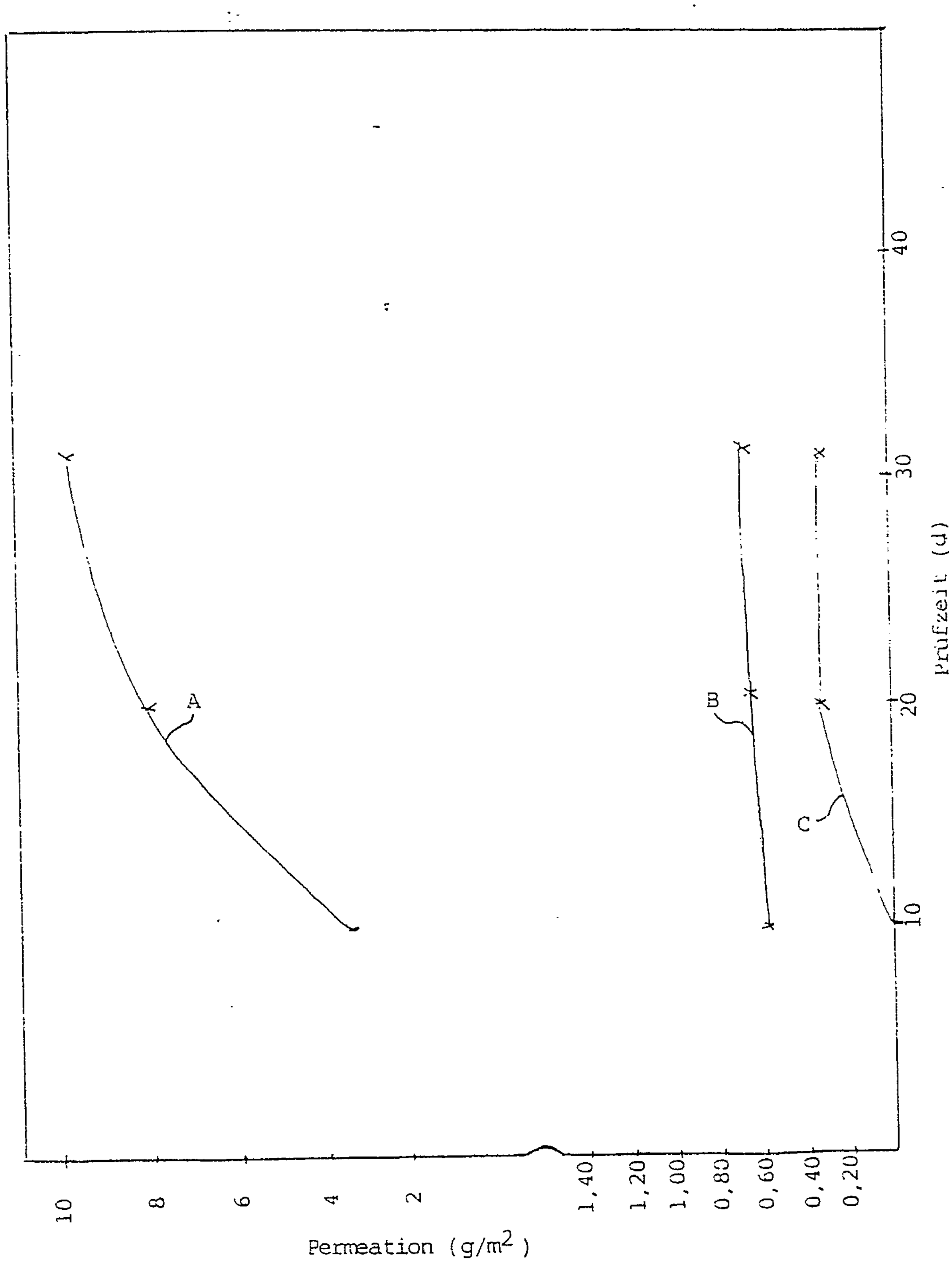

Fig. 4: Permeation bleifreies Superbenzin bei 40°C in der Gasphase
A – PE-Platte, coronabehandelt, unbeschichtet
B – " , " , Beschichtung aus Beispiel 4
C – " , " , Beschichtung aus Beispiel 1

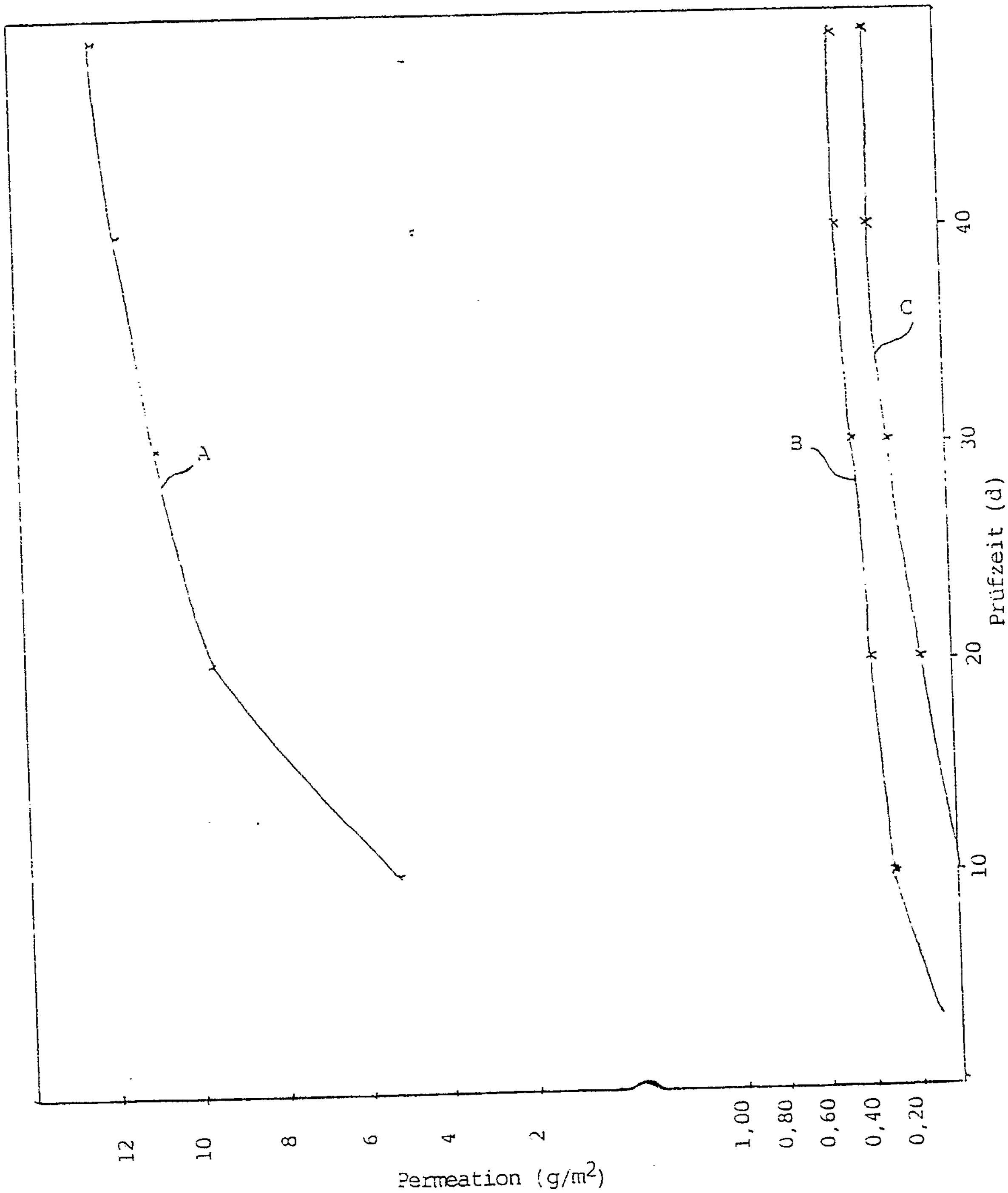

Europäisches Patentamt

# EUROPÄISCHER RECHERCHENBERICHT

Nummer der Anmeldung

EP 90114900.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| A | EP - A1 - 0 035 609 (SWEDLOW, INC.) * Beispiele; Ansprüche * | 1 | C 09 D 183/04<br>B 65 D 23/02<br>B 05 D 5/00 |
| A | EP - A2 - 0 171 493 (FRAUNHOFER-GESELLSCHAFT ZUR FÖRDERUNG DER ANGEWANDTEN FORSCHUNG) * Ansprüche; Beispiele; Seite 9, Zeilen 1-9 * | 1 | |
| A | DATABASE WPIL, no. 89-168 418 DERWENT PUBLICATIONS LTD., London, GB * Zusammenfassung * & JP-A-01-108 271 (25-04-89) | 1,8 | |
| A | DATABASE WPI, no. 78-18 622 DERWENT PUBLICATIONS LTD., London, GB * Zusammenfassung * & JP-A-53-008 669 (26-01-78) | 1,8 | |

RECHERCHIERTE SACHGEBIETE (Int Cl 5)

C 09 D
B 65 D
B 05 D

Der vorliegende Recherchenbericht wurde für alle Patentansprüche erstellt.

| Recherchenort | Abschlußdatum der Recherche | Prüfer |
|---|---|---|
| WIEN | 17-11-1990 | PAMMINGER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82